# EUROPÄISCHE PATENTANMELDUNG

(11) **EP 0 626 458 A1**
(43) Veröffentlichungstag der Anmeldung: **30.11.1994**
(21) Anmeldenummer: 94890088.1
(22) Anmeldetag: 20.05.1994
(51) Int. Cl.: C22B 7/04

(54) **Verfahren zur Gewinnung der metallischen Phase aus dispersen Mischungen aus Leichtmetallen und nichtmetallischen Komponenten**

(30) Priorität: 24.05.1993 AT 1003/93
(71) Anmelder: Kos, Bernd, Dipl.-Ing., A-8700 Leoben (AT); MARHOLD, Harald, A-8700 Leoben (AT)
(72) Erfinder: Kos, Bernd Dr., A-8700 Leoben (AT); Marhold, Harald Dr., A-8700 Leoben (AT)
(74) Vertreter: Brauneiss, Leo, Dipl.Ing.

(57) **Zusammenfassung**

Die Erfindung befaßt sich mit der Aufgabe, ein vorteilhaftes Verfahren zur Gewinnung der metallischen Phase aus einer dispersen Mischung bestehend aus mindestens einem Leichtmetall und aus zumindest einer nichtmetallischen Phase und gegebenenfalls zumindest teilweiser Separierung der nichtmetallischen Phasen zu schaffen.

Dazu erfolgt eine Erstellung der dispersen Mischung auf eine Temperatur in einem Bereich oberhalb der Schmelztemperatur des Metalles oder der Legierung, wonach die Mischung in eine Vorrichtung eingebracht und einer Beschleunigung unterworfen und desintegriert wird. Die metallische Phase wird koalesziert, gesammelt und erstarren gelassen.

## Beschreibung

Die Erfindung betrifft ein Verfahren zur Gewinnung der metallischen Phase aus einer dispersen Mischung, bestehend aus mindestens einem Leichtmetall, insbesondere Aluminium, oder aus einer Legierung aus diesem(n) leichten Metall(en) und aus zumindest einer nichtmetallischen Phase, gebildet aus zumindest einem Oxid oder einer Oxidverbindung von diesem(n) Metall(en), gegebenenfalls einem oder mehreren weiteren Stoff(en) , zum Beispiel Salzen oder Salzmischungen und dergleichen, bei höheren Temperaturen, insbesondere aus bei Verfahren zur Erzeugung, Verarbeitung sowie Rückgewinnung von Aluminium und Aluminiumlegierungen anfallenden Krätzen und gegebenenfalls zumindest teilweiser Separierung der nichtmetallischen Phasen derselben.

Leichtmetalle wie Aluminium, Silizium, Magnesium und dergleichen sowie Leichtmetallegierungen haben eine sehr große Affinität zu Sauerstoff und Stickstoff und reagieren mit diesen, im wesentlichen die Atmosphäre bildenden Gasen unter Bildung von Oxiden und Nitriden.
Aluminiumoxid weist ein höheres spezifisches Gewicht als metallisches Aluminium auf, dessen Oberflächen- und Grenzflächenspannung sowie die Makrostruktur des Oxids bewirken jedoch ein Tragen der Oxidbestandteile auf der Oberfläche bzw. ein Schwimmen der Krätze auf der Schmelze.

Eine schmelzmetallurgische Gewinnung, Verarbeitung, Rückgewinnung und dergleichen von Leichtmetallen erfolgt zumeist an Luft, sodaß dabei an der Oberfläche der schmelzenden Teile und /oder des Schmelzbades Reaktionsprodukte bzw. nichtmetallische Phasen, insbesondere Oxide, gebildet werden und in der Folge das Metallbad bedecken.

Vor einem Abstich bzw. Guß des flüssigen Metalles muß die Krätze abgezogen und ausgetragen werden. Krätzen enthalten jedoch immer, häufig sogar in beträchtlicher Menge, Metall in Form von feinen Tröpfchen in den Räumen zwischen den Oxidkristallen, wobei eine derartige disperse Mischung oftmals einen Metallgehalt bis zu 80% aufweisen kann. Eine einfache Entmetallisierung der dispersen Mischung gemäß dem Oberbegriff des Patentanspruches 1 bei den üblichen Temperaturen über dem Schmelzpunkt des Metalles gestaltet sich wegen der Oberflächen- und Grenzflächenspannung und der strukturellen Eigenschaften der Nichtmetallphase schwierig, wodurch das Ausbringen des Schmelzprozesses erniedrigt ist und große Metallmengen ungenutzt bleiben. Die bisher bekannt gewordenen Verfahren und Vorrichtungen zum Entmetallisieren von Krätzen sind aufwendig und/oder wenig wirkungsvoll, weil noch beträchtliche Metallmengen in den Rückständen verbleiben. Metallhaltige Krätzen bzw. die hohen Metallgehalte in den Reststoffen bei derzeit industriell genutzten Metallausbringungsverfahren für Krätzen/Schlacken sind jedoch auch eine Gefahr für die Umwelt, sodaß eine gefahrlose Deponierung mit hohem Aufwand verbunden ist.
Hier will die Erfindung Abhilfe schaffen und setzt sich zum Ziel, ein Verfahren anzugeben, mit welchem auf einfache Weise aus dispersen Mischungen wie Krätzen und Schlacken die metallische Phase mit hohem Ausbringen gewonnen und gegebenenfalls nichtmetallische Phasen, zumindest teilweise, separiert werden können.
Dieses Ziel wird bei dem eingangs genannten Verfahren dadurch erreicht, daß die disperse Mischung, gegebenenfalls aus mehreren Einzelmischungen gebildet, auf eine Temperatur in einen Bereich oberhalb der Schmelztemperatur des Metalles oder der Legierung gebracht und/oder gehalten und/oder bei dieser ausgeglichen wird, wonach die Mischung in eine, vorzugsweise in ihrer Temperatur regelbare, insbesondere kühlbare Kontaktflächen, zum Beispiel Kokillenflächen, aufweisende Vorrichtung eingebracht und einer Beschleunigung im wesentlichen senkrecht zu dieser Fläche oder senkrecht zur größten Ausdehnung einer Projektion dieser Flächen unterworfen und desintegriert wird und die metallische Phase koalesziert an der bzw im Bereich der Kontaktfläche(n) gesammelt und unter Einfluß dieser erstarren gelassen wird.

Die durch die Erfindung erzielten Vorteile sind insbesondere darin zu sehen, daß die disperse Mischung mit hohem Wirkungsgrad, das heißt mit geringen Aufwand an Energeie und hohem Ausbringen, entmetallisiert wird. Aus Krätzen kann bei An wendung des erfindungsgemäßen Verfahrens über 90% des dispers feinverteilten Metalles koalesziert erstarren gelassen und somit in entsprechend reiner Form für den weiteren Einsatz gewonnen werden. Dabei ist wichtig, daß bei einer Einbringung in die Vorrichtung im wesentlichen alle Volumsbereiche der dispersen Mischung sich auf einer Temperatur befinden, die oberhalb der Schmelztemperatur des zu gewinnenden Metalles liegt. Daß dabei die im Vergleich mit dem Oxid leichtere metallische Phase sich in Richtung der Beschleunigungskraft unterhalb des Oxides sammelt, also, daß sozusagen ein schwererer Körper auf einem leichterem schwimmt, war für den Fachmann überraschend und kann nur mit einem Zusammenwirken von Grenzflächen- sowie Oberflächenspannung und der strukturellen Eigenschaften der Nichtmetallphase gedeutet werden. Bei der fortschreitenden Erstarrung des Metalles erfolgt nicht wie erwartet eine Einbindung von Oxidkristallen, sondern die Bildung einer geometrischen Phasengrenzfläche.

Besonders vorteilhaft für eine hohe Reinheit des Metalles ist, wenn die koaleszierende metallische Phase mit der Maßgabe erstarren gelassen wird, daß der von der (den) Kontaktfläche(en) abgewandten, im wesentlichen von Kristalliten und Ausscheidungen freie Flüssigkeitsbereich des sich verfestigenden Metalles eine Stärke bzw. Tiefe aufweist, welche durch eine insbesondere eingeregelte Wärmeströmung zur Kontaktfläche hin gleich oder größer gehalten wird als dem größten Durchmesser der Teilchen der festen Phase(n), insbesondere der im wesentlichen von Oxiden gebildeten Phase(n) entspricht. Gleichzeitig wird durch eine entsprechende Regelung der Wärmeströmumg eine Minimierung der Chargendauer bzw. der Verfahrenszeit je Füllung der Vorrichtung erreicht.

Sowohl für eine rasche als auch möglichst vollkommene Gewinnung bzw. Abscheidung der metallischen Phase ist es von Vorteil, wenn die disperse Mischung mit einer Temperatur in einem Bereich von 2 bis 400°C, insbesondere von ca. 250°C, oberhalb des Schmelzpunktes des Metalles bzw. des Schmelzbereiches der Legierung in die Vorrichtung zum Koaleszieren des flüssigen Metalles eingebracht wird.

Wenn, wie gemäß einer Variante vorgesehen ist, die disperse Mischung im wesentlichen einer Bahn- und Radialbeschleunigung, insbesondere mit wechselnder Intensität unterworfen wird, so erfolgt insbesondere bei höheren Krätzetemperaturen eine rasche Desintegration und eine Erstarrung von besonders reinem Metall.

Insbesondere im Hinblick auf eine einfache Desintegrationsvorrichtung ist es bevorzugt, wenn die disperse Mischung im wesentlichen einer Radialbeschleunigung unterworfen wird.

Sowohl für ein schnelles Koaleszieren des Metalles als auch für ein Erreichen eines hohen Entmetallisierungsgrades hat es sich als besonders vorteilhaft herausgestellt, wenn die disperse Mischung zumindest zeitweise einer Beschleunigung gebildet aus Bahn- und Radialbeschleunigung und/oder einer Bahn- und Radialbeschleunigung mit einer zusätzlichen Normalbeschleunigung und/oder einer Bahn- und Radialbeschleunigung mit einer Beschleunigung in Richtung der Drehachse unterworfen wird, wobei gegebenenfalls eine oder mehrere Beschleunigung(en) wechselnde Intensität aufweist(en). Durch einen dabei erreichbaren "Rütteleffekt" wird das makroskopische Gefüge der Nichtmetallkomponente(n) des dispersen Phasengemisches verändert und es resultiert eine höhere Entmetallisierung sowie gegebenenfalls eine teilweise Separierung der nichtmetallischen Phasen.

Im Sinne einer Abkürzung des Verfahrens hat es sich als günstig erwiesen, wenn die disperse Mischung zumindest kurzzeitig einer Beschleunigung von mindestems dem Einfachen, vorzugsweise größer als dem Dreifachen, jedoch höchstens dem Zweihundertachtzigfachen, vorzugsweise höchstens dem Zwanzigfachen, insbesondere höchstens dem dem Zehnfachen, der Erdbeschleunigung unterworfen wird. Bei der Gewinnung von Aluminium und Aluminiumlegierungen aus dispersen Mischungen bzw. Krätzen sind beispielsweise Beschleunigungswerte von 3 bis 7 mal größer als die Erdbeschleunigung besonders vorteilhaft.

Wenn gemäß einer bevorzugten Form die disperse Mischung bis zu eine mindestens 80%, vorzugsweise mindestens 95% betragenden Entmetallisierung der Beschleunigung unterworfen wird, ist eine hohe Wirtschaftlichkeit des Verfahrens durch die hohe Rückgewinnung von wieder einsetzbarem Metall gegeben.

Bei einer Rückgewinnung des Metalls aus Schrott, beispielsweise aus Aluminiumabfall, wie Dosen und dergleichen, kann an diesen anhaftender oder mitgeführter Sauerstoff mit dem Metall reagieren, Oxide bilden und rückstands- bzw. schlackenbildend wirken. Bei einigen metallurgischen Prozessen wird eine niedrig schmelzende Salzmischung, zum Beispiel NaCl und KCl in einem Verhältnis von ca. 1:1, aufgegeben, in welcher die eingebrachten und gebildeten Oxidteilchen gelöst werden. Durch die Salzzugabe kann der Prozeßablauf und das Metallausbringen günstig beeinflußt werden, jedoch wird eine zusätzliche nichtmetallische Phase gebildet. Um die Kosten für eine umweltgerechte Deponierung möglichst niedrig und insbesondere die Menge an Neueinsatz von Salzen gering zu halten, kann es von Vorteil sein, wenn bei oder nach dem Koaleszieren der metallischen Phase aus einer nichtmetallischen Mischphase zumindest eine im wesentlichen oxidische Komponente und eine Salzkomponente zumindest teilweise separiert werden und gegebenenfalls zumindest eine dieser Komponenten in separierter Form aus der Desintegrationsvorrichtung ausgetragen und einer Wiederverwertung oder einem Wiedereinsatz im metallurgischen Prozeß zugeführt werden.

Im folgenden wird die Erfindung anhand von Beispielen näher erläutert:
Beispiel 1: 20 kg Aluminiumkrätze mit einem Gehalt an metallischem Aluminium von 75 Massen-% wurden aus einem Schmelzgefäß ausgebracht und bei einer Temperatur von ca. 840°C in eine Desintegrationsvorrichtung, ausgebildet als Zentrifugentrommel senkrechter Bauart aus Stahl mit einem Innendurchmesser von 400 mm und einer Innenhöhe von 250 mm eingefüllt. Es wurde nach einer Anlaufzeit von 1.5 min eine derartige Drehzahl eingehalten, daß in der innersten Schicht eine Radialbeschleunugung von 4.5 g aufgebracht wurde. Die Zentrifugierzeit bei 800 bis 660°C betrug 3 min. Die Abkühlung erfolgte mit Sprühwasser von der Außenseite der Trommel her. Ein geschlossener Ring metallischen Aluminiums mit einer Masse von15.2 kg wurde erhalten. Es verblieben 4.8 kg Al₂O₃ problemlos entsorgbarer, sandartiger Konsistenz mit einem Restgehalt an metallischem Aluminium von ca. 7 Massen%.
Beispiel 2: Es wurde wie in Beispiel 1 beschrieben vorgegangen, eine vertikal angeordnete Zentrifuge, aber mit einer zusätzlichen oszillierenden Bewegung in Richtung der Rotationsachse wurde verwendet, deren Innenraum bei 450 mm Innendurchmesser einen unteren Teil mit abgestuften kleinerem Innendurchmesser von 350 mm und einer Innenhöhe von 200 mm bei einer Gesamtinnenhöhe von 500 mm aufwies und als Vorkammer wirkte. Erhalten wurde nach der Erstarrung ein 15.7 kg Masse aufweisender, geschlossener Ring metallischen Aluminiums, welcher von Oxideinschlüssen praktisch frei war. 4.3 kg sandartiges Aluminiumoxid wiesen einen Restaluminiumgehalt von etwa 5 % (Masse) auf.
Beispiel 3: Es wurde wie in Beispiel 1 beschrieben verfahren, jedoch wurde der Krätze 100 g eine NaCl/KCl - Gemisches 1:1 (w/w) zugesetzt. Das Resultat war ein Aluminiumring mit einer Masse von 15.5 kg und das verbleibende Aluminiumoxid (4.4 kg) enthielt ca. 6% metallisches Aluminium.

## Patentansprüche

1. Verfahren zur Gewinnung der metallischen Phase aus einer dispersen Mischung bestehend aus mindestens einem Leichtmetall, insbesondere Aluminium, oder aus einer Legierung aus diesem(n) leichten Metall(en) und aus zumindest einer nichtmetallischen Phase, gebildet aus zumindest einem Oxid oder einer Oxidverbindung oder anderen Nichtmetallverbindungem von diesem(n) Metall(en) gegebenenfalls einem oder mehreren weiteren Stoff(en) , zum Beispiel Salzen oder Salzmischungen und dergleichen, bei höheren Temperaturen, insbesondere aus bei Verfahren zur Erzeugung, Verarbeitung sowie Rückgewinnung von Aluminium und Aluminiumlegierungen anfallenden Krätzen und gegebenenfalls zumindest teilweise Separierung der nichtmetallischen Phasen der Krätzen, dadurch gekennzeichnet, daß die dispersen Mischungen, gegebenenfalls aus mehreren Einzelmischungen gebildet, auf eine Temperatur in einem Bereich oberhalb der(des) Schmelztemperatur bzw. -bereiches des Metalles oder der Legierung gebracht und/ oder gehalten und / oder bei dieser ausgeglichen wird, wonach die Mischung in eine zumindest eine vorzugsweise in ihrer Temperatur regelbare, insbesondere kühlbare Kontaktfläche ,zum Beispiel Kokillenfläche(n), aufweisende Vorrichtung eingebracht und einer Beschleunigung im wesentlichen senkrecht zu dieser Fläche oder senkrecht zur größten Ausdehnung einer Projektion dieser Flächen unterworfen und desintegriert wird und die metallische Phase koalesziert an der bzw, im Bereich der Kontaktfläche(n) gesammelt und unter Einfluß dieser erstarren gelassen wird.

2. Verfahren nach Anspruch 1, dadurch gekennzeichnet, daß die koaleszierende metallische Phase mit der Maßgabe erstarren gelassen wird, daß der von der (den) Kontaktfläche(n) abgewandten, im wesentlichen von Kristalliten und Ausscheidungen freien Flüssigkeitsbereich des sich verfestigenden Metalles eine Stärke bzw. Tiefe aufweist, welche durch eine inbesondere eingeregelt Wärmeströmung zur Kontaktfläche gleich oder größer gehalten wird als dem größten Durchmesser der Teilchen der festen Phase(n), insbesondere der im wesentlichen von Oxiden gebildeten Phase entspricht.

3. Verfahren nach Anspruch 1 oder 2, dadurch gekennzeichnet, daß die disperse Mischung mit einer Temperatur in einem Bereich von 2 bis 400°C, vorzugsweise bis 250°C, oberhalb der Schmelzpunktes des Metalles bzw. des Schmelzbereiches der Legierung in die Vorrichtung zum Koaleszieren der flüssigen Metallpartikel eingebracht wird.

4. Verfahren nach einem der Ansprüche 1 bis 3, dadurch gekennzeichnet, daß die disperse Mischung im wesentlichen einer Radial- beschleunigung unterworfen wird.

5. Verfahren nach einem der Ansprüche 1 bis 3, dadurch gekennzeichnet, daß die disperse Mischung einer Radialbeschleunigung, insbesondere mit wechselnder Intensität, unterworfen wird.

6. Verfahren nach einem der Ansprüche 1 bis 5, dadurch gekennzeichnet, daß die disperse Mischung einer Beschleunigung, gebildet aus Bahn- und Radialbeschleunigung und/oder einer Bahn- und Radialbeschleunigung mit einer zusätzlichen Normalbeschleunigung und/oder einer Radial- und Bahnbeschleinigung mit einer in Richtung der Drehachse wirkenden Beschleunigung unterworfen wird , wobei gegebenenfalls eine der Beschleunigungen eine wechselnde Intensität aufweisen .

7. Verfahren nach einem der Ansprüche 1 bis 6, dadurch gekennzeichnet, daß die disperse Mischung zumindest kurzzeitig einer Beschleunigung von mindestens dem Einfachem, vorzugsweise größer als dem Dreifachem, jedoch höchstens dem
Zweihundertachtzigfachem, vorzugsweise höchstens dem Zwanzigfachen, insbesondere höchstens dem Zehnfachen der Erdbeschleunigung unterworfen wird.

8. Verfahren nach einem der Ansprüche 1 bis 7,dadurch gekennzeichnet, daß die disperse Mischung bis zu einer mindestens 80%, vorzugsweise mindestens 95%, betragenden Entmetallisierung der Beschleunigung unterworfen wird.

9. Verfahren nach einem der Ansprüche 1 bis 8, dadurch gekennzeichnet, daß bei oder nach einem Koaleszieren der metallischen Phase die separierte Nichtmetallphase gesondert aus der Desintegrationsvorrichtung ausgebracht wird.

10. Verfahren nach einem der Ansprüche 1 bis 9, dadurch gekennzeichnet, daß bei oder nach dem Koaleszieren der metallischen Phase zumindest eine im wesentlichen oxidische Komponente und eine Salzkomponente zumindest teilweise separiert werden, diese Komponenten in separierter Form aus der Desintegrationsvorrichtung ausgetragen und gegebenenfalls einer Wiederverwertung bzw. einem Wiedereinsatz im metallurgischen Prozeß zugeführt werden.
